(19) Europäisches Patentamt
European Patent Office
Office européen des brevets

(11) Veröffentlichungsnummer: **0 192 154**
**A2**

# (12) EUROPÄISCHE PATENTANMELDUNG

(21) Anmeldenummer: **86101664.0**

(22) Anmeldetag: **10.02.86**

(51) Int. Cl.⁴: **C 08 L 71/04**
C 08 F 8/40, C 08 K 5/49
//(C08L71/04, 25:18)

(30) Priorität: **12.02.85 DE 3504646**

(43) Veröffentlichungstag der Anmeldung:
**27.08.86 Patentblatt 86/35**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Muench, Volker, Dr.**
**Luitpoldstrasse 114**
**D-6700 Ludwigshafen(DE)**

(72) Erfinder: **Hambrecht, Juergen, Dr.**
**Werderstrasse 30**
**D-6900 Heidelberg(DE)**

(72) Erfinder: **Echte, Adolf, Dr.**
**Leuschnerstrasse 42**
**D-6700 Ludwigshafen(DE)**

(72) Erfinder: **Hoenl, Hans, Dr.**
**Hauptstrasse 69a**
**D-6719 Obersuelzen(DE)**

(72) Erfinder: **Groh, Wolfgang, Dr.**
**Mannheimer Strasse 94**
**D-6800 Mannheim 31(DE)**

## (54) Halogenfreie, selbstverlöschende thermoplastische Formmasse.

(57) Die Erfindung betrifft eine halogenfreie, selbstverlöschende thermoplastische Formmasse, enthaltend, jeweils bezogen auf Gesamtmischung aus A, B, C + D,

A 30 bis 90 Gew.% eines Poly(phenylen)ethers,

B 30 bis 5 Gew.% eines schlagzäh modifizierten Polymerisats eines monovinylaomatischen Monomeren,

C 0, 1 bis 4 Gew.% Flammschutzzusätze auf Basis von Phosphor enthaltenden Verbindungen,
aus der Klasse der Phosphine, Phosphinoxide, Hypophosphite, Phosphite, Phosphonate, Hypodiphosphate und Phosphate oder von elementarem Phosphorund als weiteres Flammschutzmittel

D 1 bis 39,9 Gew.% eines durch anionische Polymerisation hergestellten, aus Styrol bestehenden oder Styrol enthaltenden (Co)Polymerisates, dessen lebendes Anion nach Beendigung der Polymerisation mit einer Phosphor enthaltenden Grupp umgesetzt worden ist.

Die erfindungsgemäße Formmasse wird vorzugsweise zur Herstellung von Formteilen verwendet.

EP 0 192 154 A2

0192154

Halogenfreie, selbstverlöschende thermoplastische Formmasse

Die Erfindung betrifft eine halogenfreie selbstverlöschende thermoplastische Formmasse auf Basis eines schlagzäh modifizierten Polymerisats mindestens einer monovinylaromatischen Verbindung, insbesondere eines Styrolhomo-, p-Methylstyrolhomo- oder Styrol/p-Methylstyrolcopolymerisates, sowie Phosphor enthaltenden Flammschutzzusätzen.

Aufgrund der korrosiv wirkenden Verbrennungsgase bei Einsatz von halogenhaltigen Substanzen sind halogenfreie selbstverlöschende Formmassen erstrebenswert. Es wurden bereits verschiedene Lösungswege vorgeschlagen. So werden in der DE-OS 25 46 621 die Verwendung von Triarylphosphaten, wie z.B. Triphenylphosphat, zur Flammfestausrüstung thermoplastischer Formmassen, bestehend aus Styrolpolymerisaten und Poly(phenylen)ethern beschrieben. Die US-PS 4 278 588 beschreibt den Einsatz von z.B. Triphenylphosphinoxid für die Flammfestausrüstung solcher thermoplastischer Massen. Die US-PS 4 255 324 hat Mischungen von Phosphinoxiden und Phosphonaten, insbesondere cyclischen Phosphonaten, für diesen Zweck zum Gegenstand.

Allen diesen Formmassen ist gemeinsam, daß relativ hohe Mengen an Flammschutzmitteln zugesetzt werden müssen, um auch bei hohen Ansprüchen, wie z.B. bei dem UL 94-Brandtest der Underwriter Laboratories an 1,6 mm-Teststäbchen, einen vollständigen Brandschutz, d.h. die V1 oder V0-Einstufung, zu erzielen. Darüber hinaus besitzen diese Formmassen des Standes der Technik eine unbefriedigende Wärmeformbeständigkeit und z.T. ungenügende mechanische Eigenschaften sowie ein unbefriedigendes Verarbeitungsverhalten, das sich bei der Extrusion durch Ablagerungen von Flammschutzmitteln in den Entgaserdomen der Extruder oder bei der Spritzgußverarbeitung in hohen Spritztemperaturen und Drucken z.T. an Formbelag bemerkbar macht.

Zum Stand der Technik nennen wir die DE-OS 31 32 030

In dieser Schrift werden die Vorteile von thermoplastischen Mischungen aus Poly(p-methylstyrol) und Poly(phenylen)ethern, ausgerüstet mit Triphenyl(phosphat), bezüglich der Wärmeformbeständigkeit herausgestellt. Das darin enthaltene Triphenylphosphat führt aber zu den bereits erwähnten Ablagerungen und Formbelägen.

Der vorliegenden Erfindung lag daher die Aufgabe zugrunde, thermoplastische Formmassen auf der Grundlage von Styrol- und/oder Alkylstyrolpolymerisaten und Poly(phenylen)ethern zu schaffen, die nach Entzünden mit

Vo/P

einer heißen Flamme in wenigen Sekunden verlöschen, nicht brennend abtropfen, keine Halogenflammschutzmittel enthalten, eine hohe Wärmeformbeständigkeit, gute mechanische Eigenschaften und vor allem gute Verarbeitungseigenschaften aufweisen.

Die Aufgabe wird durch Formmassen gemäß Patentanspruch 1 gelöst.

Die Erfindung betrifft daher eine halogenfreie, selbstverlöschende thermoplastische Formmasse, enthaltend, jeweils bezogen auf die Gesamtmischung aus A, B, C + D,

A 30 bis 90 Gew.% eines Poly(phenylen)ethers,

B 30 bis 5 Gew.% mindestens eines schlagzäh modifizierten Polymerisats mindestens eines monovinylaomatischen Monomeren,

C Flammschutzzusätze auf Basis von Phosphor enthaltenden Verbindungen,

dadurch gekennzeichnet, daß 0,1 bis 4 Gew.% der Komponente C, auf Basis von mindestens einer anorganischen und/oder organischen Phosphorverbindung aus der Klasse der Phosphine, Phosphinoxide, Hypophosphite, Phosphite, Phosphonate, Hypodiphosphate und Phosphate oder von elementarem Phosphor zugegen sind

und die Formmasse ferner

als weiteres Flammschutzmittel

D 1 bis 39,9 Gew.% eines durch anionische Polymerisation hergestellten, aus Styrol bestehenden oder Styrol enthaltenden (Co)Polymerisates aufweist, dessen lebendes Anion nach Beendigung der Polymerisation mit mindestens einer Phosphor enthaltenden Gruppe umgesetzt worden ist.

Im folgenden wird der Aufbau der erfindungsgemäßen Formmasse aus den Komponenten, deren Herstellung und die Herstellung der Formmasse eingehend beschrieben. Unter Formmassen sollen dabei Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die erfindungsgemäße Formmasse enthält die Komponente A, B, C und D. Vorzugsweise besteht sie aus diesen. Sie kann ferner, bezogen auf 100 Gewichtsteile der Formmasse A + B + C + D, noch übliche Zusatzstoffe E enthalten.

Die erfindungsgemäße Formmasse enthält, jeweils bezogen auf die Formmasse,

30 bis 90 Gew.%, insbesondere 35 bis 85 Gew.% und vorzugsweise 40 bis 80 % der Komponente A (Polyphenylenether)

5 bis 30 Gew.%, insbesondere 8 bis 28 Gew.% der Komponente B (schlagzähes (Co)Polymerisat)

0,1 bis 4,0 Gew.%, der Komponente C (Phosphorverbindung)

1 bis 39,9 Gew.%, insbesondere 5 bis 39,9 Gew.% der Komponente D (an Polymerisat mit Endgruppenverschluß);

Sie kann ferner enthalten jeweils 0,05 bis 0,5 Gewichtsteile an üblichen Zusatzstoffen.

<u>Komponente (A)</u>

Bei der Komponente (A) der erfindungsgemäßen Formmasse handelt es sich um an sich bekannte thermoplastische Poly(phenylen)ether üblichen Molekulargewichts, die z.B. im Handel erhältlich sind.

Die Polyphenylenether können nach den bekannten Verfahren aus Phenolen durch oxidative Kupplung hergestellt werden, wie es z.B. beschrieben ist in den US-Patentschriften 3 306 879, 3 914 266, 3 956 442, 2 965 069, 3 972 851, 3 496 236, 3 367 978 und 4 140 675.

Bevorzugte Polyphenylenether haben die allgemeine Formel

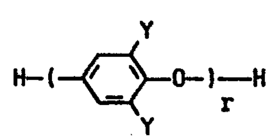

wobei r eine positive Zahl ist und vorzugsweise größer 20 ist, y ein monovalenter Substituent ist, wie Wasserstoff oder Kohlenwasserstoffrest ohne ein tertiäres Kohlenstoffatom in α-Position, der gegebenenfalls über ein Sauerstoffatom an den Phenylkern gebunden sein kann.

Beisielhaft seien genannt:
Poly(2,5-dilauryl-1,4-phenylen)ether,
Poly(2,6-dilauryl-1,4-phenylen)ether,
Poly(2,6-dimethoxi-1,4-phenylen)ether,
Poly(2,6-diethoxi-1,4-phenylen)ether,
Poly(2-methoxi-6-ethoxi-1,4-phenylen)ether,
Poly(2-ethyl-6-stearyloxi-1,4-phenylen)ether,
Poly(2-methyl-6-phenyl-1,4-phenylen)ether,
Poly(2,6-dibenzyl-1,4-phenylen)ether,
Poly(2-ethoxi-1,4-phenylen)ether.

Ebenfalls geeignet sind Copolymere von verschiedenen Phenolen, wie 2,6-Dimethylphenol und 2,3,6-Trimethylphenol.

Besonders bevorzugt für die erfindungsgemäßen Abmischungen sind solche, bei denen beide X = Alkyl mit 1 bis 4 C-Atomen, wie Poly(2,6-dimethyl-1,4-phenylen)ether, Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether und Poly(2-ethyl-6-propyl-1,4-phenylen)ether.

Sie weisen intrinsische Viskositäten oder Grenzviskositäten von $[\eta]$ = 0,4 bis 0,7 dl/g auf (bestimmt an Lösungen des Polymeren in Chloroform bei 25°C).

Komponente B

Die Komponente B der erfindungsgemäßen Formmassen soll wenigstens ein schlagzäh modifiziertes Polymerisat oder Copolymer mindestens eines monovinylaromatischen Monomeren sein. Als monovinylaromatische Monomere kommen dabei insbesondere Styrol und/oder die kern- oder seitenkettenalkylierten Styrole mit 9 C-Atomen in Betracht. Vorzugsweise wird aber Styrol allein verwendet. Die Komponente B wird man sich durch Polymerisation von z.B. Styrol in Gegenwart eines Kautschuks, z.B. Polybutadien, erhalten.

Die meist angewandten Verfahren zur Herstellung schlagzäh modifizierter Styrolpolymerisate sind die Polymerisation in Masse oder Lösung, wie sie

beispielsweise in der US-PS 2 694 906 beschrieben sind. Selbstverständlich sind auch andere Verfahren anwendbar.

Die schlagzäh modifizierten Styrol und/oder kernalkyliertes Styrol enthaltenden (Co)Polymere sind bekannt. Ihre Darstellung erfolgt wie in den Beispielen 1 bis 5 beschrieben.

Als Kautschuke mit einer Glastemperatur Tg <0°C werden die üblicherweise für die Schlagzähmodifizierung von Styrolpolymerisaten gebräuchlichen natürlichen oder synthetischenm Kautschuke eingesetzt. Geeignete Kautschuke sind außer Naturkautschuk z.B. (Poly(butaiden), Poly(isopren) und Mischpolymerisate des Butadiens und/oder Isoprens mit Styrol oder z.B. auch mit anderen Comonomeren, wie Acrylsäureester.

(Vgl. z.B. DE-OS 14 20 775, DE-OS 14 95 089, GB-PS 649 166, DE-AS 11 38 921, DE-AS 12 24 486, DE-AS 12 60 135 und DE-AS 12 38 2307.)

Geeignet sind ferner Elastomere von Copolymerisaten aus Acrylsäureestern mit Acrylnitril oder Vinylethern und Copolymerisate aus Ethylen, Propylen und einem nicht konjugiertem Dien (EPDM-Kautschuke).

Besonders bevorzugt eingesetzt wird Poly(butadien). Ganz besonders eignet sich Butadien-Polymerisat mit einem 1,4-cis-Gehalt, der zwischen 25 und 98 liegt.

Der Anteil des Kautschuk, bezogen auf B, liegt in dem dem Fachmann bekannten Bereich von 1 bis 25 Gew.%, insbesondere 4 bis 15 Gew.%.

<u>Komponente D (Flammschutzmittel)</u>

Bei der Komponente D handelt es sich um organische und anorganische Phosphor enthaltende Verbindungen, in denen der Phosphor die Wertigkeitsstufe -3 bis +5 besitzt.

Unter der Wertigkeitsstufe soll der Begriff "Oxidationsstufe" verstanden werden, für den noch andere Begriffe wie Oxidationszahl, Ladungszahl und ähnliche verwendet werden. Sie sind in dem Lehrbuch der anorganischen Chemie von A.F. Hollemann und E. Wiberg, Walter de Gruyter und Co. (1964, 57. bis 70. Auflage), Seite 166 bis 177, wiedergegeben.

Phosphorverbindungen der Wertigkeitsstufen -3 bis +5 leiten sich von Phosphin (-3), Diphosphin (-2), Phosphinoxid (-1), elementarem Phosphor

($\pm$0), hypophosphoriger Säure (+1), phosphoriger Säure (+3), Hypodiphosphorsäure (+4) und Phosphorsäure (+5) ab.

Beispiele für Phosphorverbindungen der Phosphin-Klasse, die die Wertigkeitsstufe -3 aufweisen, sind aromatische Phosphine wie Triphenylphosphin, Tritolylphosphin, Trinonylphosphin, Trinaphthylphosphine u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a. Besonders geeignet ist Tetranaphthyldiphosphin.

Phosphorverbindungen der Wertigkeitsstufe -1 leiten sich vom Phosphinoxid ab. Beispiele sind Triphenylphosphinoxid, Tritolylphosphinoxid, Trinonylphosphinoxid, Trinaphthylphopshinoxid. Bevorzugt ist Triphenylphosphinoxid.

Phosphor der Wertigkeitsstufe $\pm$0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite. Sie können Salzcharakter haben oder rein organischer Natur sein. Die Salze enthalten Kationen der Elemente aus der I., II. und III. Hauptgruppe und der I. bis VIII. Nebengruppe des periodischen Systems (s. Lehrbuch "Anorganische Chemie" von F.A. Cotton, G. Wilkinson, Verlag Chemie (1967)). Beispiele sind Calciumhypophosphit und Magnesiumhypophosphit. Des weiteren kommen Doppelhypophosphite mit der Struktur $CeMe(H_2PO_2)_6$ in Frage, wobei Me = Erbium, Thallium, Ytterbium, Lutetium sein kann. Es können auch komplexe Hypophosphite verwendet werden, wie beispielsweise $Me[Zr(H_2PO_2)_6]$, $Me[H_2PO_2)_6]$, wobei Me = Magnesium, Calcium, Mangan, Cobalt, Nickel, Eisen, Zink und Cadmium sein kann.

Neben diesen anorganischen Hypophosphiten kommen auch organische Hypophosphite in Frage. Geeignet sind z.B. Cellulosehypophosphitester, Polyvinylalkoholhypophosphitester, Ester der hypophosphorigen Säure mit Diolen, wie z.B. von 1,1-Dodecyldiol. Auch substituierte Phosphinsäuren und deren Anhydride wie z.B. Diphenylphosphinsäure können eingesetzt werden. Auch Melaminhypophosphit ist geeignet. Des weiteren kommen in Frage Diphenylphosphinsäure, Di-p-tolylphosphinsäure, Dikresylphosphinsäureanhydrid, Naphthylphenylphosphinsäureanhydrid oder Phenylmethylphosphinsäureanhydrid. Es kommen aber auch Verbindungen wie Hydrochinon-, Ethylenglykol-, Propylenglykol-bis(diphenylphosphinsäure)ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäurederi-

vate, wie z.B. p-Tolylsulfonamidodiphenylphosphinsäure. Bevorzugt eingesetzt werden Hydrochinon- und Ethylenglykolbis-(diphenylphosphinsäure)-ester.

Phosphorverbindungen der Oxidationsstufe +3 leiten sich von der phosphorigen Säure ab. Beispiele sind in den US-PS 30 90 799 und 3 141 032 beschrieben. Besonders geeignet sind cyclische Phosphonate wie z.B.

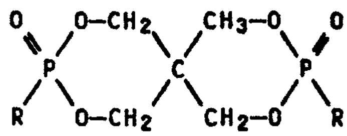

mit R = $CH_3$ und $C_6H_5$, die sich vom Pentaerythrit ableiten,

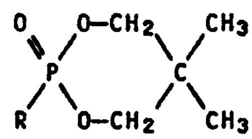

mit R = $CH_3$ und $C_6H_5$, die sich vom Neopentylglykol ableiten und

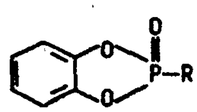

mit R = $CH_3$ und $C_6H_5$, die sich vom Brenzkatechin ableiten.

Ferner ist Phosphor der Wertigkeitsstufe +3 in Triaryl(alkyl)phosphiten, wie z.B. Triphenylphosphit, Tris(nonylphenyl)phosphit, Tris(2,4-di-tert.-butylphenyl)phosphit oder Phenyldidecylphosphit u.a. enthalten. Es können aber auch Diphosphite, wie z.B. Propylenglykol-1,2-bis(diphenylphosphit) oder cyclische Phosphite, wie

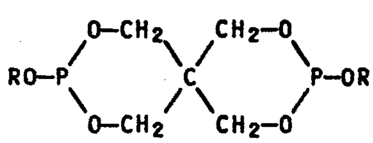

mit R = $CH_3$ und $C_6H_5$, die sich vom Pentaerythrit ableiten,

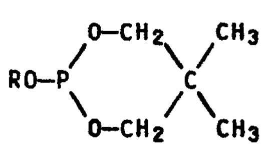

mit R = $CH_3$ und $C_6H_5$, die sich vom Neopentylglykol ableiten und

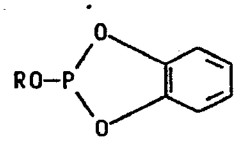

mit R = $CH_3$ und $C_6H_5$, die sich vom Brenzkatechin ableiten, in Frage.

Ganz besonders bevorzugt werden Methylneopentylphosphonat und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder

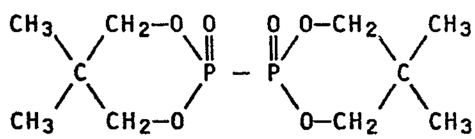

Bisneopentyl-hypodiphosphat

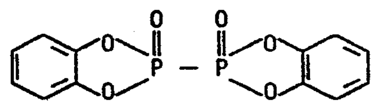

Bisbrenzkatechin-hypodiphosphat

in Betracht. Bevorzugt wird Bisneopentylhypodiphosphat.

Als Phosphorverbindungen der Oxidationsstufe +5 kommen vor allem alkyl- und arylsubstituierte Phosphate in Betracht. Beispiele sind Phenylbisdodecylphosphat, Phenylneopentylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphoshat, Bis(2-ethylhexyl)phenylphosphat, Dinonylphenylphosphat, Phenylmethylhydrogenphosphat, Di(dodecyl)-p-tolylphosphat, Tricresylphosphat, Triphenylphosphat, Dibutylphenylphosphat, p-Tolyl-bis(2,5,5-trimethylhexyl)phosphat, 2-Ethylhexyldiphenylphosphat. Besonders geeignet sind Phosphorverbindungen, bei denen jedes R ein Aryloxi-Rest ist. Ganz besonders geeignet ist dabei Triphenylphoshat.

Des weiteren können auch cyclische Phosphate eingesetzt werden. Besonders geeignet ist hierbei Diphenylpentaerythritol-diphosphat und Phenylneopentylphosphat.

Außer den oben angeführten niedermolekularen Phosphorverbindungen kommen noch oligomere und polymere Phosphorverbindungen in Frage.

Solche polymere, organische Phosphorverbindungen mit Phosphor in der Polymerkette entstehen beispielsweise bei der Herstellung von pentacyclischen, ungesättigten Phosphindihalogeniden, wie es beispielsweise in der DE-OS 20 36 173 beschrieben ist. Das Molekulargewicht, gemessen durch Dampfdruckosmometrie in Dimethylformamid, der Polyphospholinoxide soll im Bereich von 500 bis 7000, vorzugsweise im Bereich von 700 bis 2000 liegen.

Der Phosphor besitzt hierbei die Oxidationsstufe -1.

Ferner können anorganische Koordinationspolymere von Aryl(Alkyl)-phosphinsäuren, wie z.B. Poly[natrium(I)-methylphenylphosphinat], Poly[Zn-(II)-dibutyl-co-dioctylphosphinat], Poly[Al(III)-tris(diphenylphosphinat)] oder Poly[Co(II)-Co-Zn(II)-bis(octylphosphinat)], eingesetzt werden. Ihre Herstellung wird in DE-OS 31 40 520 angegeben. Der Phosphor besitzt die Oxidationszahl+1.

Weiterhin können solche polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbisphenol-A oder 1,4'-Dihydroxy-diphenylsulfon entstehen (vgl. US 3 719 272 und W. Sorensen und T.W. Champbell, präparative Methoden der Polymerenchemie, Verlag Chemie, Weinheim, 1962, 123). Die inhärenten Viskositäten dieser Polymere sollen in einem Bereich von

$$\frac{\ln \eta_{rel}}{c} = 0{,}01 \text{ bis } 0{,}4,$$

vorzugsweise im Bereich von

$$\frac{\ln \eta_{rel}}{c} = 0{,}03 \text{ bis } 0{,}2,$$

liegen.

Weitere polymere Phosphorverbindungen, die in den erfindungsgemäßen Polymerisaten enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag

Stuttgart, Organische Phosphorverbindungen Teil II (1963). In Frage kommt aber auch das anorganische Poly(ammoniumphosphat).

Es können aber auch oligomre Pentaerythritphosphite, -phosphate und -phosphonate gemäß EP-PS 8 486 der allgemeinen Formeln (IV, V und VI) angewendet werden:

(IV) 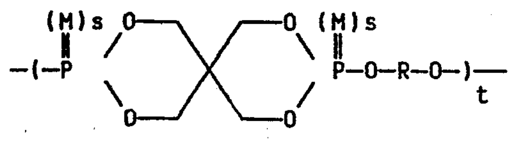

mit s = 0 oder 1 und
t = 2 bis 500
M = O, S

(V) 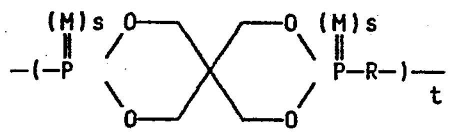

mit s = 0 oder 1 und
t = 2 bis 500
M = O, S

(VI) 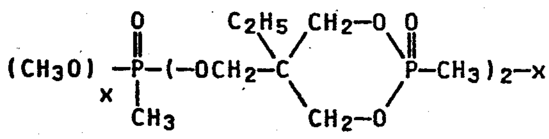

mit x = 0 oder 1,

Mobil Antiblaze 19®

worin R = $-(CH_2)_2-$
$-(CH_3)_3-$

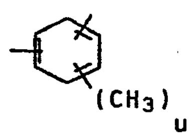

mit u = 0 bis 4,

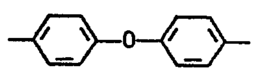

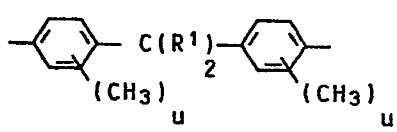

mit u = 0 bis 4
und $R^1$ = $C_1$- bis $C_4$-Alkyl oder H

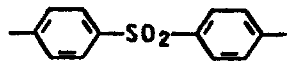

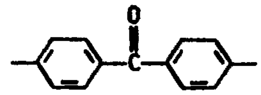

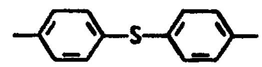

Die Aufzählung dient der Illustration der Erfindung und beinhaltet keine Einschränkung.

Ganz besonders bevorzugt zum Einsatz gelangen Triphenylphosphinoxid, Triphenylphosphat, Dimethylpentaerythritdiphosphonat, Methylneopentylphosphor und Mobil Antiblaze 19®.

Komponente D

Bei der Komponente D handelt es sich um mit Phosphor enthaltenden Endgruppen verkappte, anionisch polymerisierte Styrolpolymerisate oder aber um p-Methylstyrolhomo- oder Styrol/p-Methylstyrolcopolymerisate mit den allgemeinen Strukturen (I) und (II)

$$X - Z \quad (I)$$
$$Z - X - Z \quad (II)$$

worin X die Polymerkette mit einem Polymerisationsgrad P von P = 40 bis 200, vorzugsweise mit P = 50 bis 150, darstellt und Z eine Phosphor enthaltende Gruppe der nachstehend beschriebenen allgemeinen Formel (III)

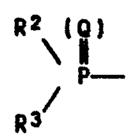 (III)

ist,
worin Q ein Sauerstoffatom oder Schwefelatom bezeichnet und $R^2$ und $R^3$ gleich oder verschieden sein können mit $R^2$, $R^3$ = H, Cl, OH, $C_1$-$C_5$-Alkyl, $C_6$-$C_{10}$-Aryl, $C_1$-$C_5$-Alkoxi und $C_6$-$C_{10}$-Aryloxi, Dimethylamino, oder aber die Reste $R^2$, $R^3$ cyclisch miteinander verknüpft sind.

Bevorzugt einzusetzende Gruppen Z sind demnach folgende Gruppen:

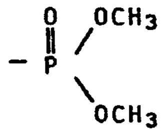

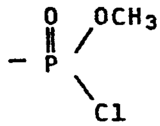

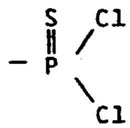

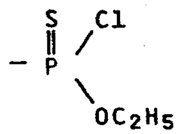

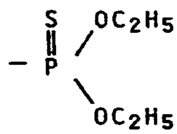

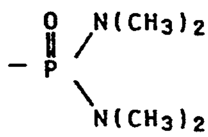

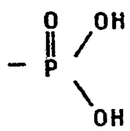

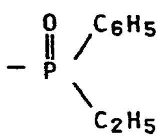

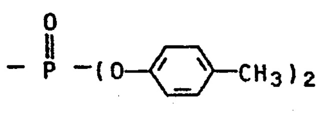

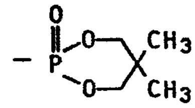

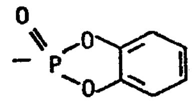

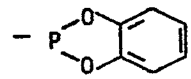

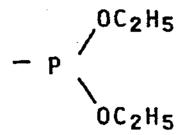

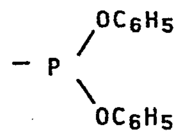

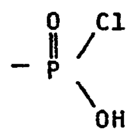

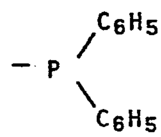

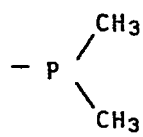

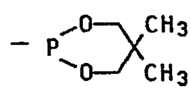

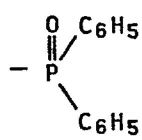

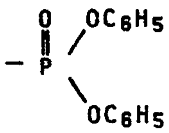

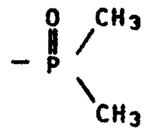

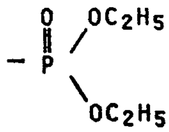

Die Aufstellung dient der Illustration und beinhaltet keine Einschränkung. Bevorzugt eingesetzt werden die zuletzt aufgeführten 5 Gruppen.

Die einzusetzenden (Co)Polymerisate X besitzen massenmittlere Molgewichte $\bar{M}_w$ von 4000 bis 20.000 (bestimmt durch die Gelpermeationschromatographie).

Die Herstellung dieser endgruppenverkappten einzusetzenden Polymerisate erfolgt vorzugsweise wie in European Polymer Journal, Band 17, Seiten 407 bis 411 (1981) beschrieben, durch die Umsetzung eines lebenden anionischen Polymerisats mit den entsprechenden Phosphorchloriden, vorzugsweise mit

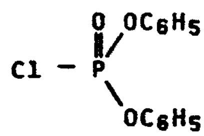

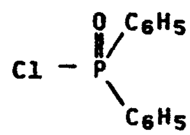

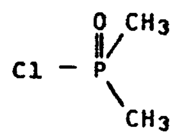

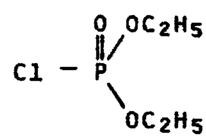

und

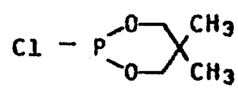

Siehe dazu Tabelle 1, Versuche 6 bis 12.

Die Herstellung der mit Phosphor enthaltenden Endgruppen verkappten, anionisch polymerisierten Styrolpolymerisate sowie ihre Brandeigenschaften und Herstellung ist an sich bekannt und z.B. auch in

Fire Safety Journal, Band 2, Seiten 257 bis 263 (1979/80);
Polymer Bulletin, Band 6, Seiten 577 bis 581 (1982); Band 7, Seiten 83 bis 87 (1982); Band 7, Seiten 303 bis 308 (1982); Band 10, Seiten 101 bis 104 (1983); Band 11, Seiten 2754 bis 280 (1984) und in
Polymer Degradation and Stability, Band 6, Seiten 105 bis 121 und Seiten 177 bis 188 (1984)

eingehend beschrieben. Die Polymerisate sind für sich selbst schwer entflammbar. Wegen ihres recht niedrigen Phosphorgehaltes wurden sie bislang noch nicht als Flammschutzzusätze eingesetzt.

Komponente F

Die erfindungsgemäßen Formmassen können als Komponente F gegebenenfalls übliche Zusatzstoffe enthalten. Als Zusatzstoffe kommen bekannte und bewährte Stabilisatoren, wie sterisch gehinderte Phenole in Betracht, die in üblichen Mengen von jeweils 0,01 bis 0,5 Gew.%, bezogen auf erfindungsgemäße Formmasse, eingesetzt werden. Ferner können Schwefel und Schwefel enthaltende Stabilisatoren wie Dithiocarbamatkomplexe, Xanthogensäuresalze, Thiazole und Zinksalze von Mercaptobenzimidazolen in üblichen Mengen von jeweils 0,01 bis 0,5 Gew.%, bezogen auf die Gesamtmischung eingesetzt werden.

Die erfindungsgemäßen Mischungen können Weichmacher und Verarbeitungshilfsmittel enthalten. Andere bekannte Zusätze sind Glasfasern, Glaskugeln, Kaolin, Quarz, Glimmer, Wollastonit, Talkum, Asbest, Titandioxid, Aluminiumoxid, Micovit, Kreide, calciniertes Aluminiumsilikat, Farbstoffe und Pigmente.

Die Einarbeitung der flammhemmenden Mittel sowie der eventuell verwendeten Zusatzstoffe kann nach einem geeigneten und bekannten Mischverfahren, z.B. in Extrudern, Knetern oder Walzen erfolgen.

Insbesondere können die Komponenten A, B, C und D der erfindungsgemäßen, flammhemmenden Masse getrennt und in Form von Pulvern oder in Form einer pulverisierten Mischung oder als Konzentrat in einem der Thermoplasten (vorzugsweise Komponente B) in den anderen Thermoplasten (vorzugsweise Komponente A) eingearbeitet werden, um die beabsichtigte Zusammensetzung zu erzielen.

Die erfindungsgemäßen Formmassen können durch Spritzgießen oder Strangpressen zu selbstverlöschenden Formkörpern oder Profilen verarbeitet werden.

Die erfindungsgemäßen Formmassen zeichnen sich außer durch ihre Eigenschaft der Selbstverlöschung und dem Nichtauftreten von Abtropfen und Ablagerungen in Extruderdomen und Formbelägen auch noch durch außerordentlich gute mechanische Eigenschaften aus.

Die in den Beispielen und Vergleichsversuchen erwähnten Brandtests wurden wie folgt durchgeführt:

1. Die Flammschutzprüfung erfolgt im vertikalen Brandtest nach den Vorschriften der Underwriter Laboratories zwecks Einordnung in eine der Brandklassen UL 94 V0, UL 94 V1 oder UL 94 V2.

   Die Einstufung eines flammgeschützten Thermoplasten in die Brandklasse UL 94 V0 erfolgt, wenn folgende Kriterien erfüllt sind: Bei einem Satz von 5 Proben der Abmessungen 127 x 12,7 x 3,16 mm dürfen alle Proben nach zweimaliger Beflammung von 10 Sek. Zeitdauer mit einer offenen Flamme (Höhe 19 mm) nicht länger als 10 Sek. nachbrennen. Die Summe der Nachbrennzeiten bei 10 Beflammungen von 5 Proben darf nicht größer sein als 50 Sek. Es darf kein brennendes Abtropfen, vollständiges Abbrennen oder ein Nachglühen von länger als 30 Sek. erfolgen. Die Einstufung in die Brandklasse Ul 94 V1 erfordert, daß die Nachbrennzeiten nicht länger als 30 Sek. sind und daß die Summe der Nachbrennzeiten von 10 Beflammungen von 5 Proben nicht größer als 250 Sek. ist. Das Nachglühen darf nie länger als 60 Sek. dauern. Die übrigen Kriterien sind identisch mit den oben erwähnten. Eine Einstufung in die Brandklasse Ul 94 V2 erfolgt dann, wenn es bei Erfüllung der übrigen Kriterien zur Einstufung UL 94 V1 zu brennendem Abtropfen kommt.

2. Durch die Wärmeformbeständigkeit nach Vicat wurde nach DIN 53 460 in °C bestimmt.

   Für die Durchführung von Versuchen wurden die nachstehend beschriebenen Stoffe hergestellt bzw. verwendet.

Komponente A

Für die Herstellung der erfindungsgemäßen Formmassen wurde ferner Poly(2,6-dimethyl-1,4-phenylen)ether (Komponente A) nach US-PS 3 914 266

mit einer Grenzviskosität von [η] = 0,60 dl/g, gemessen bei 25°C in Chloroform, hergestellt.

Komponente B

Versuch 1

Herstellung eines schlagzäh modifizierten Styrol/p-Methylstyrol (50:50)-Copolymeren

In einem Rührkessel mit Ankerrührer werden

6,286 Teile Styrol
6,286 Teile PMS
1,106 Teile Buna CB HX 529 C ($B_1$)
0,322 Teile Mineralöl S 5000
0,017 Teile Irganox 1076 ($E_1$)
0,010 Teile tert. Dodecylmercaptan

unter Rühren (150 UpM) auf 123°C aufgeheizt. Bei dieser Temperatur wird bis zu einem Umsatz von 35 % polymerisiert. Danach werden in die Reaktionsmasse 0,007 Teile Dicumylperoxid eingerührt.

Anschließend erfolgt eine Suspensionspolymerisation, d.h. nach Zugabe von 18 Teilen Wasser, 0,180 Teilen ®Luviskol K 90 und 0,036 Teilen $Na_4P_2O_7$ wird 3 Stunden bei 110°C, 3 Stunden bei 130°C und 4 Stunden bei 140°C auspolymerisiert. Das resultierende Endprodukt wird abfiltriert, mit Wasser gewaschen und über Nacht getrocknet (65°C, Wasserstrahlvakuum).

Eigenschaften:

| | | |
|---|---|---|
| Flüchtige Anteile | : | 1,4 %; |
| VZ | : | 75,6 ml/g; |
| Gelgehalt | : | 35,7 %; |
| Quellungsindex | : | 10,6 %; |
| Vicattemperatur | : | 83,4°C; |
| MFI | : | 5,1 g/10 Min.; |
| Streckspannung | : | 15,0 N/mm²; |
| Reißfestigkeit | : | 13,7 N/mm²; |
| Reißdehnung | : | 27,0 %; |
| aKL | : | 12.2 kJ/m². |

0192154

Versuch 2

Herstellung eines schlagzäh modifizierten Styrol/p-Methylstyrol (60:40)-Copolymeren

Das Verfahren gemäß Versuch 1 wurde wiederholt, nur daß anstelle einer (50:50)-Mischung eine solche von Styrol : p-Methylstyrol = (60:40) eingesetzt wurde.

Eigenschaften:

| | | |
|---|---|---|
| Flüchtige Anteile | : | 1,34 %; |
| VZ | : | 72,8 ml/g; |
| Gelgehalt | : | 35,3 %; |
| Quellungsindex | : | 10,4 %; |
| Vicattemperatur | : | 82,9°C; |
| MFI | : | 4,9 g/10 Min.; |
| Streckspannung | : | 15,4 N/mm²; |
| Reißfestigkeit | : | 13,9 N/mm²; |
| aKL | : | 11,9 kJ/m². |

Versuch 3

Herstellung eines schlagzäh modifizierten Styrol/p-Methylstyrol (38:62)-Copolymeren.

Das Verfahren gemäß Versuch 1 wurde wiederholt, nur daß anstelle einer (50:50)-Mischung eine solche von Styrol : p-Methylstyrol = (38:62) eingesetzt wurde.

Eigenschaften:

| | | |
|---|---|---|
| Flüchtige Anteile | : | 1,13 %; |
| VZ | : | 73,5 ml/g; |
| Gelgehalt | : | 34,8 %; |
| Quellungsindex | : | 10,7 %; |
| Vicattemperatur | : | 83,9°C; |
| MFI | : | 4,4 g/10 Min.; |
| Streckspannung | : | 15,3 N/mm²; |
| Reißfestigkeit | : | 13,8 N/mm²; |
| aKL | : | 11,8 kJ/m². |

Es wurde gemäß der in Versuch 1 angegebenen Vorschrift schlagzäh modifiziertes Poly(styrol) (= HIPS) und schlagzäh modifiziertes Poly(-Methylstyrol) hergestellt (= HIPPMS).

Versuch 4

Herstellung eines Styrolhomopolymeren nach dem Verfahren in Versuch 1.

Eigenschaften:

| | | |
|---|---|---|
| Flüchtige Anteile | : | 0,80 %; |
| VZ | : | 75,1 ml/g; |
| Gelgehalt | : | 38,0 %; |
| Quellungsindex | : | 10,0 %; |
| Vicattemperatur | : | 85,6°C; |
| MFI | : | 2,6 g/10 Min.; |
| Streckspannung | : | 13,8 N/mm$^2$; |
| Reißfestigkeit | : | 14,2 N/mm$^2$; |
| Reißdehnung | : | 27.0 %; |
| aKL | : | 11,9 kJ/m$^2$. |

Versuch 5

Herstellung eines p-Methylstyrolhomopolymeren nach dem Verfahren in Versuch 1.

Eigenschaften:

| | | |
|---|---|---|
| Flüchtige Anteile | : | 1,7 %; |
| VZ | : | 72,5 ml/g; |
| Gelgehalt | : | 35,1 %; |
| Quellungsindex | : | 10,9 %; |
| Vicattemperatur | : | 82,9°C; |
| MFI | : | 5,3 g/10 Min.; |
| Streckspannung | : | 15,5 N/mm$^2$; |
| Reißfestigkeit | : | 13,8 N/mm$^2$; |
| Reißdehnung | : | 29,0 %; |
| aKL | : | 11,5 kJ/m$^2$. |

Komponente C

Die eingesetzten Flammschutzmittel Triphenylphosphinoxid, Triphenylphosphat und Mobil ®Antiblaze 19 waren handelsübliche Produkte. Ferner wurden die nachstehend beschriebenen Produkte verwendet.

Methanphosphonsäureneopentylester

1,240 kg (≙ 10 Mol) Dimethylmethylphosphonat werden mit 1,040 kg (≙ 10 Mol) Neopentylglykol und 0,0405 kg $MgCl_2$ aufgeschmolzen und so lange bei 180 bis 190°C gerührt, bis kein Methanol mehr abdestilliert (ca. 10 bis 16 Stunden).

Ausbeute (lt. Gaschromatographie): 90 %
Festpunkt : 121 bis 123°C
Eigenschaften: weiße kristalline Substanz, geruchsfrei

Dimethylpentaerythritdiphosphonat

Die Synthese der Verbindung erfolgte nach GB-PS 2 083 042.
Fp.: 236 bis 242°C.

Komponente D

Die Herstellung der mit Phosphor enthaltenden Endgruppen verkappten, anionisch polymerisierten Styrolpolymerisate erfolgte gemäß European Polymer Journal, Band 17, Seiten 407 bis 411. Die Tabelle 1 gibt eine Übersicht über die hergestellten Produkte und ihre Eigenschaften.

Beispiele 1 bis 20 und Vergleichsversuche A bis N

Die Komponenten A, B, C und D wurden in einem Fluidmischer gemischt und auf einem Extruder bei 260°C aufgeschmolzen und miteinander innig vermischt. Die Mischung wird anschließend granuliert. Von der jeweiligen Mischung werden durch Spritzguß bei 250°C die entsprechenden Prüfkörper hergestellt. Die Versuchsergebnisse sind in der Tabelle 2 zusammengestellt. Die Prozentangaben beziehen sich auf das Gewicht der Gesamtmischung aus A + B + C + D.

In der Tabelle 2 werden folgende Abkürzungen verwendet:

Poly(2,6-dimethyl-1,4-phenylen)ether = A;
Versuch Nr. 1 (Styrol/p-Methylstyrol (50:50)-Copolymer = Ba;

0192154

Versuch Nr. 2 (Styrol/p-Methylstyrol (60:40)-Copolymer) = Bb;
Versuch Nr. 3 (Styrol/p-Methylstyrol) (38:62)-Copolymer = Bc;
Versuch Nr. 4 (Styrolhomopolymer) = Bd;
Versuch Nr. 5 (p-Methylstyrolhomopolymer) = Be;
Triphenylphosphinoxid = $C_{2a}$;
Triphenylphosphat = $C_{2b}$;
Mobil Antiblaze 19 = $C_{2c}$;
Methanphosphonsäureneopentylester = $C_{2d}$;
Dimethylpentaerythridiphosphonat = $C_{2e}$;
Versuch Nr. 6 (Styrolhomopolymer mit Diethylphosphonatendgruppen) = $D_{1a}$;
Versuch Nr. 7 (Styrolhomopolymer mit Dimethylphosphinoxidendgruppen) = $D_{1b}$;
Versuch Nr. 8 (Styrol/p-Methylstyrol (50:50)-Copolymer mit Neopentylphosphonitendgruppen) = $D_{1c}$;
Versuch Nr. 9 (Styrol/p-Methylstyrol (72:28)-Copolymer mit Diphenylphosphonatendgruppen) = $D_{1d}$;
Versuch Nr. 10 (Styrol/p-Methylstyrol (30:70)-Copolymer mit Diphenylphosphinoxidendgruppen) = $D_{1e}$;
Versuch Nr. 11 (p-Methylstyrol mit Diethylphosphonatendgrupen) = $D_{1f}$;
Versuch Nr. 12 (p-Methylstyrol mit Dimethylphosphinoxidendgruppen) = $D_{1g}$.

Tabelle 1: Herstellung und Eigenschaften endgruppenverkappter, anionischer Polymerisate

| Versuch Nr. | Reaktanden-Monomer Styrol (%) | p-Methylstyrol (%) | Abbruchmittel | Produkte Phosphorgehalt | massenmittleres Molgewicht $\overline{M}_w$ nach Gelpermeationschromatographie | Viskositätszahl VZ, 0,5 %ig in DMF (dl/g) |
|---|---|---|---|---|---|---|
| 6 | 100 | 0 | $Cl-P(O)(OC_2H_5)_2$ | 0,47 | ca. 5.200 | 7,6 |
| 7 | 100 | 0 | $Cl-P(O)(CH_3)_2$ | 0,52 | ca. 6.800 | 8,1 |
| 8 | 50 | 50 | 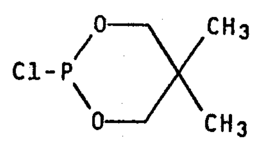 | 0,32 | ca.10.000 | 9,9 |
| 9 | 72 | 28 | $Cl-P(O)(OC_6H_5)_2$ | 0,27 | ca.12.000 | 10,2 |
| 10 | 30 | 70 | $Cl-P(O)(C_6H_5)_2$ | 0,28 | ca.12.000 | 10,3 |
| 11 | 0 | 100 | $Cl-P(O)(OC_2H_5)_2$ | 0,61 | ca. 4.700 | 7,2 |
| 12 | 0 | 100 | $Cl-P(O)(CH_3)_2$ | 0,51 | ca. 7.000 | 8,4 |

Tabelle 2: Erfindungsgemäße Formmasse und Vergleichsproben

| Beispiel | Mischung Gew.-% der Komponente | | | | Einstufung nach UL 94 | | Wärmeformbeständigkeit (°C) | Formbeläge | Ablagerung in Entgasungsdomen |
|---|---|---|---|---|---|---|---|---|---|
| | A | B | C | D | 1"/16 | 1"/8 | | | |
| 1 | 52 | $B_a$, 15 | $C_{2a}$, 3 | $D_{1c}$, 30 | V1 | V0 | 156 | keine | keine |
| 2 | 52 | $B_b$, 10 | $C_{2a}$, 3 | $D_{1d}$, 35 | V1 | V0 | 154 | keine | keine |
| 3 | 53 | $B_c$, 20 | $C_{2b}$, 2,5 | $D_{1e}$, 24,5 | V0 | V0 | 160 | keine | keine |
| 4 | 53 | $B_d$, 14 | $C_{2b}$, 3 | $D_{1a}$, 30 | V1 | V0 | 148 | keine | keine |
| 5 | 51 | $B_e$, 27,5 | $C_{2d}$, 1,5 | $D_{1a}$, 20 | V0 | V0 | 158 | keine | keine |
| 6 | 60 | $B_e$, 19,6 | $C_{2c}$, 1,4 | $D_{1b}$, 19 | V0 | V0 | 168 | keine | keine |
| 7 | 70 | $B_e$, 13,9 | $C_{2e}$, 1,1 | $D_{1f}$, 15 | V0 | V0 | 172 | keine | keine |
| 8 | 45 | $B_e$, 26,8 | $C_{2b}$, 3,2 | $D_{1g}$, 25 | V1 | V0 | 154 | keine | keine |
| 9 | 42 | $B_e$, 22,1 | $C_{2b}$, 3,9 | $D_{1d}$, 32 | V0 | V0 | 151 | keine | keine |
| 10 | 68 | $B_d$, 11,7 | $C_{2b}$, 2,8 | $D_{1b}$, 17,5 | V0 | V0 | 167 | keine | keine |
| 11 | 60 | $B_d$, 7,2 | $C_{2e}$, 0,8 | $D_{1c}$, 32 | V1 | V0 | 160 | keine | keine |
| 12 | 59 | $B_d$, 12,1 | $C_{2e}$, 0,9 | $D_{1d}$, 28 | V1 | V0 | 161 | keine | keine |

Tabelle 2: Fortsetzung

| Beispiel | Mischung Gew.-% der Komponente | | | | Einstufung nach UL 94 | | Wärmeformbeständigkeit (°C) | Formbeläge | Ablagerung in Entgasungsdomen |
|---|---|---|---|---|---|---|---|---|---|
| | A | B | C | D | 1"/16 | 1"/8 | | | |
| 13 | 58 | $B_d$, 19,2 | $C_{2a}$, 2,8 | $D_{1e}$, 20 | V0 | V0 | 163 | keine | keine |
| 14 | 51 | $B_b$, 22,5 | $C_{2a}$, 3,5 | $D_{1g}$, 23 | V0 | V0 | 157 | keine | keine |
| 15 | 35 | $B_a$, 23,9 | $C_{2b}$, 3,1 | $D_{1c}$, 38 | V1 | V1 | 134 | keine | keine |
| 16 | 52 | $B_a$, 24,6 | $C_{2b}$, 2,4 | $D_{1a}$, 21 | V0 | V0 | 156 | keine | keine |
| 17 | 76 | $B_a$, 12,3 | $C_{2b}$, 0,9 | $D_{1b}$, 10,8 | V0 | V0 | 169 | keine | keine |
| 18 | 72 | $B_c$, 14,85 | $C_{2c}$, 0,45 | $D_{1e}$, 12,7 | V0 | V0 | 171 | keine | keine |
| 19 | 79 | $B_c$, 10 | $C_{2b}$, 0,8 | $D_{1e}$, 10,2 | V0 | V0 | 178 | keine | keine |
| 20 | 37 | $B_c$, 23,9 | $C_{2b}$, 3,8 | $D_{1e}$, 35,3 | V1 | V1 | 135 | keine | keine |

Tabelle 2: Fortsetzung

| Vergleichsversuche | Mischung Gew.-% der Komponente | | | | Einstufung nach UL 94 | | Wärmeformbeständigkeit (°C) | Formbeläge | Ablagerung in Entgasungsdomen |
|---|---|---|---|---|---|---|---|---|---|
| | A | B | C | D | 1"/16 | 1"/8 | | | |
| A | 53 | $B_d$, 36 | $C_{2a}$, 11 | - | V0 | V0 | 119 | ja | ja |
| B | 53 | $B_e$, 35 | $C_{2b}$, 12 | - | V0 | V0 | 123 | ja | ja |
| C | 62 | $B_a$, 29 | $C_{2b}$, 9 | - | V0 | V0 | 121 | ja | ja |
| D | 63 | $B_b$, 31 | $C_{2c}$, 6 | - | V0 | V0 | 124 | ja | ja |
| E | 74 | $B_d$, 21,8 | $C_{2d}$, 4,2 | - | V0 | V0 | 140 | ja | ja |
| F | 79 | $B_c$, 17 | $C_{2e}$, 4 | - | V0 | V0 | 162 | ja | keine |
| G | 36 | $B_a$, 49 | $C_{2b}$, 15 | - | V2 | V1 | 92 | ja | ja |
| H | 45 | $B_e$, 43 | $C_{2b}$, 12 | - | V1 | V1 | 91 | ja | ja |
| I | 42 | $B_d$, 50 | $C_{2d}$, 8 | - | V1 | V0 | 123 | ja | ja |

Tabelle 2: Erfindungsgemäße Formmasse und Vergleichsproben

| Vergleichsversuche (nicht erfindungsgemäß) | Mischung Gew.-% der Komponente A | B | C | D | Einstufung nach UL 94 1"/16 | 1"/8 | Wärmeformbeständigkeit ($^0C$) | Formbeläge | Ablagerung in Entgasungsdomen |
|---|---|---|---|---|---|---|---|---|---|
| J | 50 | $B_d$, 17 | - | $D_{1a}$, 33 | keine | V2 | 150 | keine | keine |
| K | 51 | $B_e$, 10 | - | $D_{1e}$, 39 | keine | V2 | 164 | keine | keine |
| L | 60 | $B_a$, 20 | - | $D_{1c}$, 20 | keine | V2 | 169 | keine | keine |
| M | 74 | $B_a$, 6 | - | $D_{1d}$, 20 | keine | V1 | 174 | keine | keine |
| N | 37 | $B_c$, 22 | - | $D_{1b}$, 41 | keine | keine | 138 | keine | keine |

Patentansprüche

1. Halogenfreie, selbstverlöschende thermoplastische Formmasse, enthaltend, jeweils bezogen auf die Gesamtmischung aus A, B, C + D,

A 30 bis 90 Gew.% eines Poly(phenylen)ethers,

B 30 bis 5 Gew.% mindestens eines schlagzäh modifizierten Polymerisats mindestens eines monovinylaomatischen Monomeren,

C Flammschutzzusätze auf Basis von Phosphor enthaltenden Verbindungen,

dadurch gekennzeichnet, daß 0,1 bis 4 Gew.% der Komponente C, auf Basis von mindestens einer anorganischen und/oder organischen Phosphorverbindung aus der Klasse der Phosphine, Phosphinoxide, Hypophosphite, Phosphite, Phosphonate, Hypodiphosphate und Phosphate oder von elementarem Phosphor zugegen sind

und die Formmasse ferner

als weiteres Flammschutzmittel

D 1 bis 39,9 Gew.% eines durch anionische Polymerisation hergestellten, aus Styrol bestehenden oder Styrol enthaltenden (Co)-Polymerisates aufweist, dessen lebendes Anion nach Beendigung der Polymerisation mit mindestens einer Phosphor enthaltenden Gruppe umgesetzt worden ist.

2. Selbstverlöschende Formmasse nach Anspruch 1, bestehend aus den Komponenten A, B, C und D.

3. Selbstverlöschende Formmasse nach Anspruch 1, dadurch gekennzeichnet, daß sie übliche Zusatzstoffe in Mengen von je 0,05 bis 0,5 Gew.-Teilen, bezogen auf 100 Gew.-Teile der Formmasse aus A, B, C und D, enthält.

4. Formmasse nach Anspruch 1, dadurch gekennzeichnet, daß das Flammschutzmittel D aus Styrol und/oder p-Methylstyrol bestehende Polymerketten mit einem Polymerisationsgrad P von 40 bis 200 darstellt, die mindestens eine Endgruppe gemäß den allgemeinen Strukturen (I) und (II) aufweisen

X - Z (I)

Z - X - Z (II)

worin X die Polymerkette darstellt und Z eine Phosphor enthaltende Gruppe der allgemeinen Formel (III),

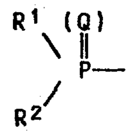

ist, und wobei stehen für

Q ein Sauerstoffatom oder Schwefelatom,

$R^1$ und $R^2$ gleich oder verschieden sein können mit $R^1$, $R^2$ = H, Cl, OH, $C_1$-$C_5$-Alkyl, $C_6$-$C_{10}$-Aryl, $C_1$-$C_5$-Alkoxi und $C_6$-$C_{10}$-Aryloxi, Dimethylamino oder cyclische Verknüpfung der Reste $R^1$ und $R^2$.

5. Verwendung der Formmasse gemäß Anspruch 1 zur Herstellung von Formteilen.

6. Formteile aus Formmassen gemäß Anspruch 1.